# EUROPEAN PATENT APPLICATION

(11) **EP 0 776 130 A2**
(43) Date of publication of application: **28.05.1997**
(21) Application number: 96118903.2
(22) Date of filing: 26.11.1996
(51) Int. Cl.: H04N 7/15

(54) **Camera control system with variable frame rate**

(30) Priority: 27.11.1995 JP 307304/95; 25.01.1996 JP 10935/96
(71) Applicant: CANON KABUSHIKI KAISHA, Tokyo (JP)
(72) Inventor: Tanaka, Koichiro, Ohta-ku, Tokyo (JP); Kato, Eiji, Ohta-ku, Tokyo (JP)
(74) Representative: Tiedtke, Harro, Dipl.-Ing.

(57) **Abstract**

A camera control system for remotely controlling a camera has one or more camera management units for managing one or more cameras whose image-capture orientation and magnification are freely externally controlled, and one or more camera controllers for controlling the cameras via the camera management units. When control of a camera is designated in the camera controller of this system, a frame-rate alteration request is issued by the camera controller. Upon receiving the frame-rate alteration request, the camera management unit enlarges the frame rate of video obtained from the camera and transfers the image data to the camera controller.

## Description

### BACKGROUND OF THE INVENTION

This invention relates to a camera control system and, more particularly, to a camera control system in which any camera of one or more cameras is remotely controlled.

In a conventional camera control system, a plurality of camera each having pan, tilt and zoom functions are placed at respective locations, the plurality of cameras are connected to a control center or to a control unit at any location by means of communication lines and any camera is capable of being remotely controlled. In this conventional camera control system, are control signal lines for transmitting camera control and status signals are required in addition to cables for transmitting audio and video signals.

Though a method of modulating camera control/status signals so as to superpose them on video/audio signals is known in the art, logically this is the same as providing separate communication channels.

Further, a camera control system capable of controlling any camera by establishing a communication path for video/audio and control signals when this is necessary is employed in video conferencing implemented on a computer network such as a LAN (local area network). In a video conferencing system, video/audio and various control information entered at an individual terminal can be transmitted to all other terminals via the same network, and the camera of any communicating party can be remotely controlled.

A camera control system in which special-purpose cables for video/audio are laid is effective in a case where the number of cameras to be remotely controlled is small, a case where location of installation is seldom changed and a case where remote control is effected from a fixed location. However, convenience diminishes when any of these requirements is not satisfied. Laying the video/audio cables requires great expenditure and changing the location of installation is very troublesome. For example, the re-laying of a video/audio cable attendant upon the change in the location of a camera is very troublesome and is not feasible under certain circumstances. If there are N-number of cameras and M-number of controllers which remotely control these cameras, then N × M video/audio cables must be laid.

Further, in a video conferencing system, the cameras capable of being remotely controlled are the small number of cameras connected to the terminals of the participants in the conference. This does not satisfy the requirement that video (and audio) from a camera at any location been seen and heard freely when desired.

When an attempt is made to select and remotely control a desired camera from among a plurality of cameras, it is preferred that a system be established in which the control unit for remotely controlling the camera and the plurality of cameras are connected to a network such as a LAN, with the video/audio and various control information being transmitted via the network. However, since there is a limitation upon the data communication speed and traffic on a network, there is also a limitation upon frame rate, namely the number of frames capable of being transmitted from a camera to the control unit every second. In particular, when a system in which any camera can be freely controlled from any of a plurality of control units on a network is constructed, not merely a system in which there is communication between a limited number of cameras and a limited number of users as in a video conferencing system, there is an increase in traffic and an even greater limitation is imposed upon frame rate.

Remote control by a control unit as described above includes control for panning, tilting, zoom-in and zoom-out. In a case where such camera control is carried out, the operator on the side of the control unit makes settings to obtain the desired video while observing the video from the camera. However, when there is a limitation upon the frame rate, as mentioned above, and the transmission of video to the control unit cannot satisfactorily follow up motion of the camera resulting from camera control, the operator cannot ascertain a change in the set state of the camera and there is a marked decline in operability.

### SUMMARY OF THE INVENTION

Accordingly, an object of the present invention is to provide a camera control system in which a plurality of cameras can be remotely controlled freely by any of a plurality of control means.

Another object of the present invention is to provide a camera control system in which a camera can be controlled smoothly while its motion is verified by the camera image.

Still another object of the present invention is to provide a camera control system in which a plurality of cameras and one or more control means are interconnected by a data network so that any camera can be remotely controlled from any one of the control means.

According to an embodiment of the present invention, the foregoing objects can be attained by providing a camera control system having one or more camera management units for managing one or more cameras whose image-capture orientation and magnification are freely externally controlled, and one or more camera controllers for controlling the cameras via the camera management units, characterized by having frame-rate altering means by which the frame rate of an image obtained from a camera when the camera is controlled by a camera controller is made larger than a frame rate which prevails when the camera is not controlled.

The frame-rate altering means enlarges the frame rate by lowering the resolution of the image.

Alternatively, the frame rate is enlarged by lowering resolution of an image when the image is subjected to compressive coding.

In either case, the frame-rate altering means comprises frame-rate alteration designating means for designating alteration of frame rate, and frame-rate alteration management means for managing alteration of frame rate.

The frame-rate alteration designating means is provided in the camera controller, and the frame-rate alteration management means is provided in the camera management unit.

Further, means are provided for adding data, which are for camera control, onto at least one of video data and audio data.

Further, means are provided for separating data, which are for camera control, that have been added onto one of at least video data and audio data.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute part of the specification, illustrate embodiments of the invention and, together with the description, serve to explain the principles of the invention.
Fig. 1 is a block diagram schematically showing the configuration of a display apparatus according to an embodiment of the present invention;
Fig. 2 is a diagram showing an example of a camera control screen;
Fig. 3 is a diagram showing an example of an image display screen;
Fig. 4 shows an example of a camera table and a connect/disconnect menu;
Fig. 5 is a flowchart showing camera control processing of a camera controller;
Fig. 6 is a flowchart showing the control procedure of a camera management unit executed in response to a frame-rate alteration command;
Fig. 7 is a flowchart showing the operating procedure of the camera management unit executed in response to a camera control command;
Fig. 8 is a flowchart showing another control procedure of the camera management unit executed in response to a frame-rate alteration command;
Fig. 9 is a block diagram illustrating the configuration of a camera control system according to another embodiment of the invention; and
Fig. 10 is a diagram showing the structure of data sent from a camera management unit to a camera controller.

### DESCRIPTION OF THE PREFERRED EMBODIMENTS

Embodiments of the present invention will now be described in detail with reference to the drawings.

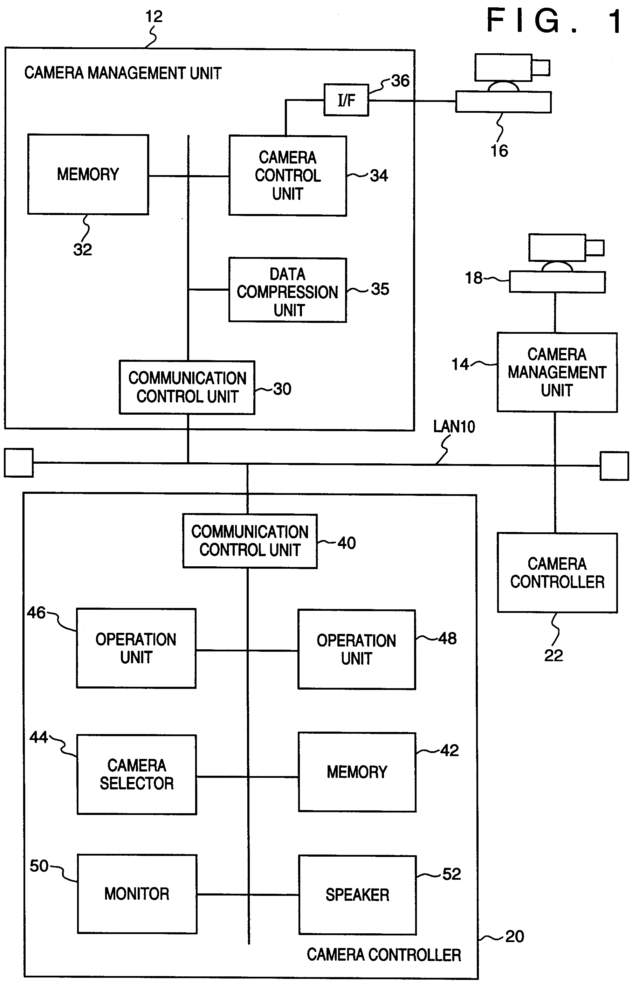

Fig. 1 is a block diagram showing the general configuration of the first embodiment.

As shown in Fig. 1, a LAN 10 comprising an Ethernet has a plurality of camera management units 12, 14 connected thereto. Video cameras (referred to as "cameras" below) 16, 18 are connected to the camera management units 12, 14. Each of the cameras 16, 18 has a microphone for audio input. Also connected to the LAN 10 are a plurality of camera controllers 20, 22 for remotely controlling the cameras 16, 18.

Though the details will be described later, the camera management units 12, 14 control the orientation (in at least one direction of panning and tilting directions) and zoom magnification of the cameras 16, 18 under management in accordance with camera control signals from the camera controllers 20, 22, and transfer video data obtained from the cameras 16 18 to the source of the control signals. When the cameras 16, 18 have been fitted with a microphone, audio data are also transferred to the source of the control signals.

The camera management unit 12 has a communication control unit 30, a memory device 32, a camera control unit 34, a data compression unit 35 and an interface 36. The communication control unit 30 controls the connection and data communication with the camera controllers 20, 22 via the LAN 10. The memory device 32, which is constituted by a memory such as a RAM or by an HDD (hard-disk drive), stores various data inclusive of video/audio data to be transferred. The camera control unit 34 controls orientation and zoom magnification of the camera 16 and supplies video/audio data from the camera 16 to the communication control unit 30 via the memory device 32. The data compression unit 35 compresses video data that has been stored in the memory device 32 and supplies the compressed data to the communication control unit 30. The interface 36 connects the camera 16 to the camera control unit 34. The camera management unit 14 has a construction identical with that of the camera management unit 12.

The functions of the blocks constituting the camera management units 12, 14 can be implemented by having a CPU execute a predetermined program, and the camera management units 12, 14 can be realized by a personal computer or work station.

The camera controller 20 comprises a communication control unit 40, a memory device 42, a camera selecting unit 44, an operation unit 46, an operation management unit 48, a display monitor 50 and a speaker 52. The communication control unit 40 controls the connection and data communication with either of the camera management units 12, 14 via the LAN 10. The memory device 42, which is constituted by a memory such as a RAM or by an HDD, stores various data inclusive of video/audio data to be transferred. The camera selecting unit 44 provides a user interface for selecting a camera to be controlled. The operation unit 46 provides a user interface for controlling the panning, tilting and zooming of one camera selected by the camera selecting unit 44. The operation management unit 48 manages the selection state of the camera by the camera selecting unit 44 and the control designation by the operation unit 46 and transmits control information back and forth between the camera management units 12, 14 which manage the camera to be controlled. The monitor 50 displays received video, and the speaker 52 outputs received audio. It should be noted that the camera controller 22 has the same construction as the camera controller 20.

Each of the camera controllers 20, 22 actually comprises a personal computer or a work station. The section composed of the camera selecting unit 44, control unit 46 and control management unit 48 is implemented in the computer by graphical user interfaces such as image elements or a selection menu displayed on the monitor 50, a pointing device such as a mouse for operating or selecting the graphic user interface, and program software for displaying the graphical user interface and implementing the operation of the pointing devices or the selection operation.

Though two camera management units 12, 14 and two camera controllers 20, 22 are illustrated in Fig. 1, it should be obvious that three or more camera management units can be connected to the LAN 10 as well as three or more camera controllers. In the description below, an example will be described in which the camera 16 is controlled by the camera controller 20 via the camera management unit 12.

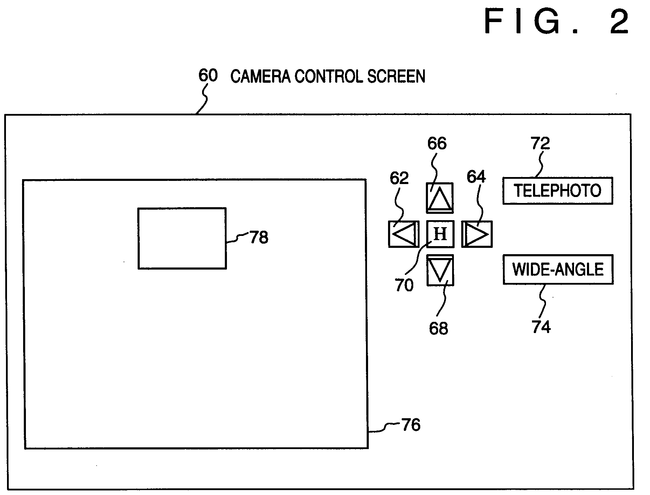

Fig. 2 shows a camera control screen presented by the operation unit 46 in Fig. 1. The camera control screen, indicated at 60, is displayed on the monitor 50. The camera control screen 60 is provided with control buttons, namely pan buttons 62, 64 which designate rotation of the camera 16 in the panning (horizontal) direction, tilt buttons 66, 68 which designate rotation of the camera 16 in the tilting direction (up and down), a home button 70 for returning the direction of the camera 16 to the front direction, a telephoto button 72 which instructs the camera 16 to zoom in for telephoto and a wide-angle button 74 which instructs the camera to zoom out for wide angle. A rectangular frame 76 indicates the largest possible area of photography obtained by maximizing the angle of view of the camera under control and panning and tilting the camera to the maximum extent. A rectangular frame 78 indicates the present area of photography, which is based upon the present prevailing panning angle, tilt angle and zoom value, at a relative position within the frame 76.

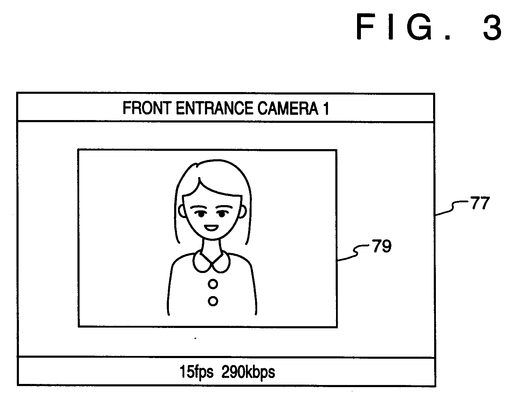

Fig. 3 illustrates an image display window 77 displayed on the screen of the monitor 50 alongside the camera control screen 60. An image window 79 provided inside the image display window 77 displays the image obtained by the camera 16. The operator controls the camera 16 while confirming motion by way of the image displayed in the display window 79. It is also possible to provide the image window 79 inside the rectangular frame 78 (see Fig. 2). In such case the frame of the image display window 77 may be made to coincide with the rectangular frame 76.

"Front Entrance Camera 1", which is displayed at the top of the image display window 77, indicates the camera that is currently acquiring the image being displayed in the image window 79, namely the camera currently being selected. Further, "15 fps" being displayed at the bottom indicates the current frame rate. In this case, the frame rate is 15 frames per second. Furthermore, "290 kbps" indicates the current data transfer rate. In this case, the data transfer rate is 290 kilobits per second. This display of information improves operability.

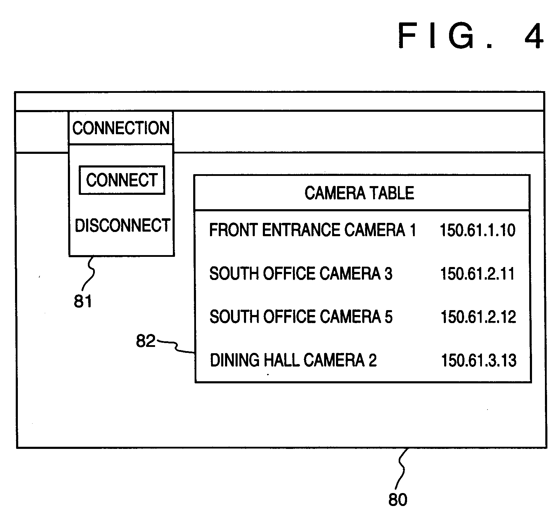

Fig. 4 illustrates a camera selection window 80, which is produced by the camera selecting unit 44 of Fig. 1, for selecting the camera to be controlled. The camera selection window also is displayed on the monitor 50. A "CONNECTION" pull-down menu 81 has connect and disconnect items. When the "CONNECTION" menu is selected by a mouse cursor (not shown), the pull-down menu 81 is displayed. With display of the pull-down menu 81, or in response to selection of a display menu (not shown) of a camera list, a camera table 82 indicating a list of all selectable cameras is displayed.

The camera table 82 displays sets of names and identification information. The names indicate individual cameras in easily understandable form, and the identification information uniquely identifies the camera management units 12, 14 of the connected parties. Since the camera management units 12, 14 and camera controllers 20, 22 are connected via the LAN 10 in this embodiment, IP addresses are adopted as the identification information. The camera names and the IP addresses of the camera management units thereof are stored beforehand in the storage device 42.

If "CONNECT" in the "CONNECTION" pull-down menu 81 is selected with any camera displayed in the camera table 82 having been chosen, this camera is rendered controllable by the camera controller 20 via the LAN 10 and the video from this camera is displayed in the video window 79 on the monitor 50.

If "DISCONNECT" in the "CONNECTION" pull-down menu 81 is selected with any already connected camera having been chosen from among the cameras displayed in the camera table 82, the privilege to control this camera is given up to another camera controller and the video from the camera vanishes from the monitor 50.

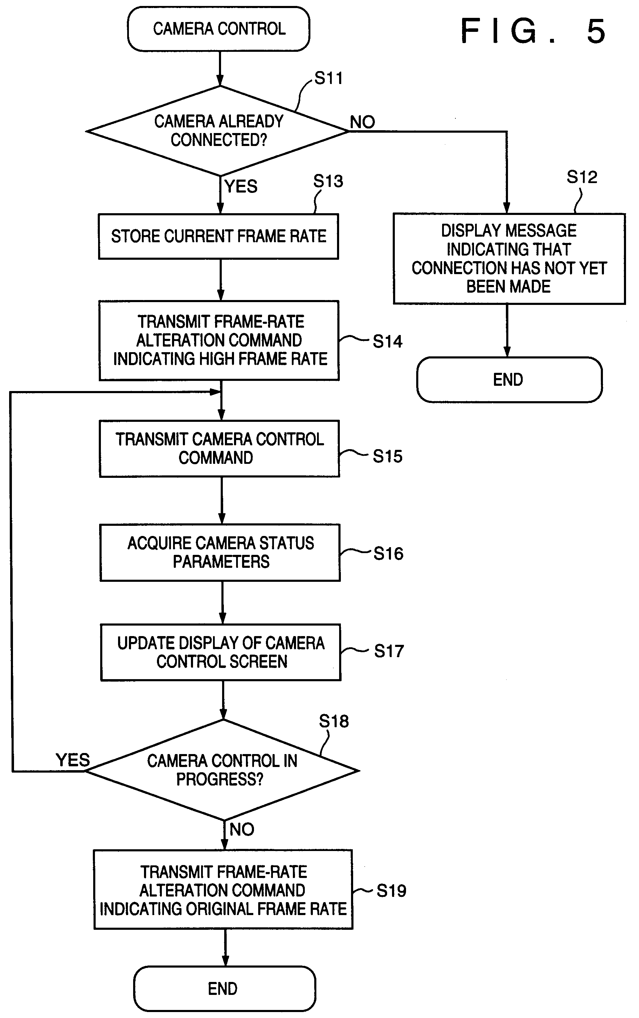

Fig. 5 is a flowchart illustrating the operation of the camera controller 20.

If the operator clicks on any of the control buttons 62 ∼ 74 of the camera control screen 60 (Fig. 2) of the operation unit 46 using a pointing device (not shown), the operation management unit 48 (Fig. 1) determines whether any camera has been connected (step S11). If a connection has not yet been made ("NO" at step S11), a display to this effect is presented on the monitor 50 and processing ends (step S12). If a connection has already been made ("YES" at step S11), first the current video frame rate (number of frames displayed per second, e.g., 15 frames per second) is displayed in the memory device 42 (S13). In this example the case described is one in which the camera 16 is already connected.

Next, in order to make the frame rate sufficiently large (e.g., 30 frames per second), the operation management unit 48 transmits a frame-rage alteration command to the connected camera management unit 12 via a communication channel that has been established by the communication control units 30, 40 (S14). The camera control unit 34 in the camera management unit 12 interprets the frame-rate alteration command and transmits the video data, which have been stored temporarily in the memory device 32, to the communication control unit 30 upon altering (enlarging) the frame rate. In this embodiment, therefore, the operation management unit 48 functions as frame-rate alteration designating means, and the camera control unit 34 functions as frame-rate alteration management means. These frame-rate alteration designating means and frame-rate alteration management means constitute frame-rate alteration means.

Thereafter, the camera control command corresponding to the clicked control button is sent to the camera management unit 12 in the same manner as the frame-rate alteration command (S15). The operation management unit 48 of the camera controller 20 acquires the status parameters of the controlled camera after the operation thereof from the camera management unit 12 (S16) and updates the frame 78 of photographic area on the camera control screen 60 (S17). The operation management unit 48 determines whether camera control is still being continued (i.e., whether the operating to hold down the control button) (S18). If camera operation is still in progress ("YES" at S18), the program returns to S15. If operation has ended ("NO" at S18), the operation management unit 48 transmits the frame-rate alteration command to the camera management unit 12 (S19) in such a manner that the video frame rate is restored to the original value stored previously at S13. Processing is then terminated.

In parallel with the camera control operation described above, the image from the camera under control continues being displayed in the image window 79 at the set frame rate. That is, the camera management unit 12 immediately alters the frame rate of the transmitted image by means of the communication control unit 30 in accordance with the frame-rate alteration command.

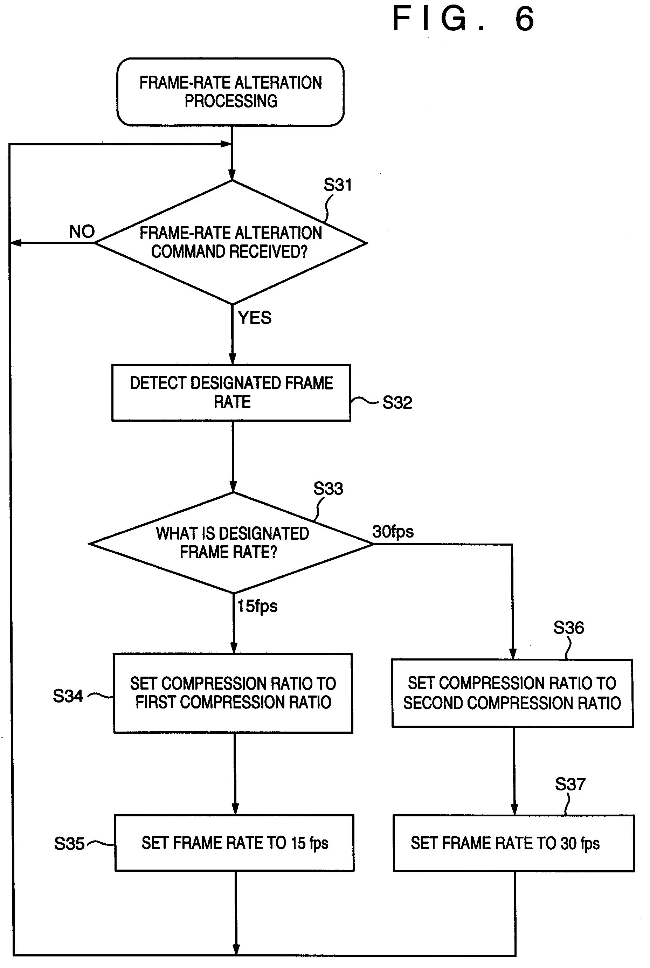

The procedure for altering the frame rate in the camera management unit 12 by the frame-rate alteration command will be described next. Fig. 6 is a flowchart showing the control procedure of the camera management unit 12 executed in response to the frame-rate alteration command. This processing is implemented by having the CPU (not shown) in the camera management unit 12 execute a control program.

When the communication control unit 30 determines at step S31 that a frame-rate alteration command has been received from the camera controller 20, the program proceeds to step S32. The specified frame rate attached to this frame-rate alteration command is detected at step S32. In this example, it is assumed that the frame rate is either 15 or 30 fps.

If the specified frame rate detected at step S32 is 15 fps, the program proceeds from step S33 to step S34, where the compression ratio of the video data compressed by the data compression unit 35 is made a first compression ratio and the transfer frame rate of the communication control unit 30 is set at 15 fps. On the other hand, if the specified frame rate detected at step S32 is 30 fps, then the program proceeds from step S33 to step S36. Here the compression ratio in the data compression unit 35 is set to a compression ratio (a second compression ratio) higher than the first compression ratio in order to prevent the amount of video data transmitted from increasing owing to an increase in the frame rate. The frame rate in the communication control unit 30 is then set at 30 fps at step S37.

The data compression unit 35 compresses the video data, which has been stored in the memory device 32, at the set compression ratio (first or second compression ratio). The communication control unit 30 attaches a tag, which indicates the set frame rate, to the compressed data that have been obtained, and then transmits the data to the camera controller 20 at this frame rate. The transmitted video data are displayed on the camera controller 20 in accordance with the frame rate indicated by the tag attached to the video data.

It should be noted that if traffic in the LAN 10 leaves some margin for data transfer at 30 fps with the compression ratio being left at that for 15 fps, then the alteration of compression ratio at steps S34, S36 may be eliminated.

If the video frame rate is small when a camera is operated, the time delay up to the moment the operator is capable of confirming the results of camera operation by motion of the image is lengthened. Consequently, the operator may hold the control buttons 62 ∼ 74 depressed more than necessary, thereby causing excessive operation and making it difficult to perform zooming smoothly.

By automatically increasing the video frame rate as set forth above at the time of camera control, the result of camera operation can be confirmed immediately by motion of the image. This makes it possible for the operator to perform a smooth operation and without excessive control.

There are occasions where the video frame rate cannot be increased sufficiently owing to limitations upon the traffic in LAN 10 or limitations upon the video display capability of the monitor 50. On such occasions the resolution of the image is lowered or the image quality of the image at the compressive encoding thereof is diminished, i.e., the compression ratio is enlarged, as in the flowchart of Fig. 6, to thereby make possible an increase in the frame rate without enlarging the amount of communication data or the amount of display data.

The operation of the camera management unit 12 in response to a camera control command will now be described with reference to the drawings.

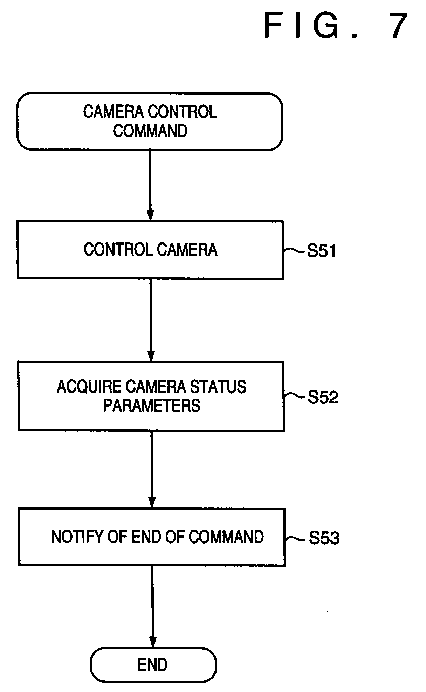

Fig. 7 is a flowchart showing the operation of the camera management unit 12 in response to a camera control command. If a camera control command is sent from the camera controller 20, the camera control unit 34 transfers this command to the camera 16 via the camera interface 36 (S51), whereby the camera 16 is driven to attain the state designated. In a case where the response from the camera 16 contains status parameters that are the result of control of the camera, these parameters are saved in the memory device 32. Otherwise, a status-parameter request command is sent to the camera 16 and is saved in the memory device 32 (S52). After the camera control command is executed, notification of end of command execution is sent back to the camera controller 20 along with status parameters stored in the memory device 32 (step S53).

Here the camera controller 20 sends the camera management unit 12 a camera control command adapted to the control command system of the camera 16 to be controlled. Ordinarily, however, the control command system differs depending upon the camera article and, in general, different camera articles are connected to the network. In such case the camera controller 20 would send the camera management unit 12 an abstracted or normalized control command and the camera control unit 34 of each camera management unit 12 would translate or convert this control command to one conforming to the camera connected thereto.

Though not described, a video/audio signal is transmitted over the LAN 10 upon being compressed and encoded. More specifically, the camera management unit 12 compresses and encodes a video/audio signal to be transmitted and outputs the compressed signal to the LAN 10. The camera controllers 20 decompresses the compressed video/audio signal from the LAN 10 and applies the decompressed signal to the monitor 50 and speaker 12.

According to this embodiment, the camera management units 12, 14 and camera controllers 20, 22 are interconnected by the Ethernet LAN. However, it should be obvious that an ISDN or public telephone line may be used instead. In such case telephone numbers can be used as the information uniquely defining the camera management units 12, 14.

According to this embodiment, the camera management unit 12 and camera controller 20 are described as being separate devices. However, it should be obvious that these can be incorporated in a single personal computer or work station. In such case there would be no need to rely upon a LAN. If the video camera is connected to the input/output interface, e.g., to a serial port, of the personal computer or work station, then the input/output interface may be opened and assigned as a logical communication channel, thereby allowing operation to be performed in the same manner as when a connection is made via the LAN.

Many modern personal computers come equipped with a video camera (and microphone) in order to be prepared for video conferencing. It should be obvious that in a case where such a computer is connected to a LAN, the user's own computer can be used as the camera controller and another party's computer can be used as the camera management unit.

In the embodiment described above, a frame-rate alteration command which request a change in frame rate is outputted by the camera controller 20 and frame rate in the camera management unit 12 is changed on the basis of this command. However, this does not impose a limitation upon the invention. For example, an arrangement may be adopted in which when designation of panning, tilting or zooming of the camera by the camera control command is detected in the camera management unit 12, the frame rate during the time of the operation corresponding to the command is raised. In this case, the frame-rate alteration command is unnecessary.

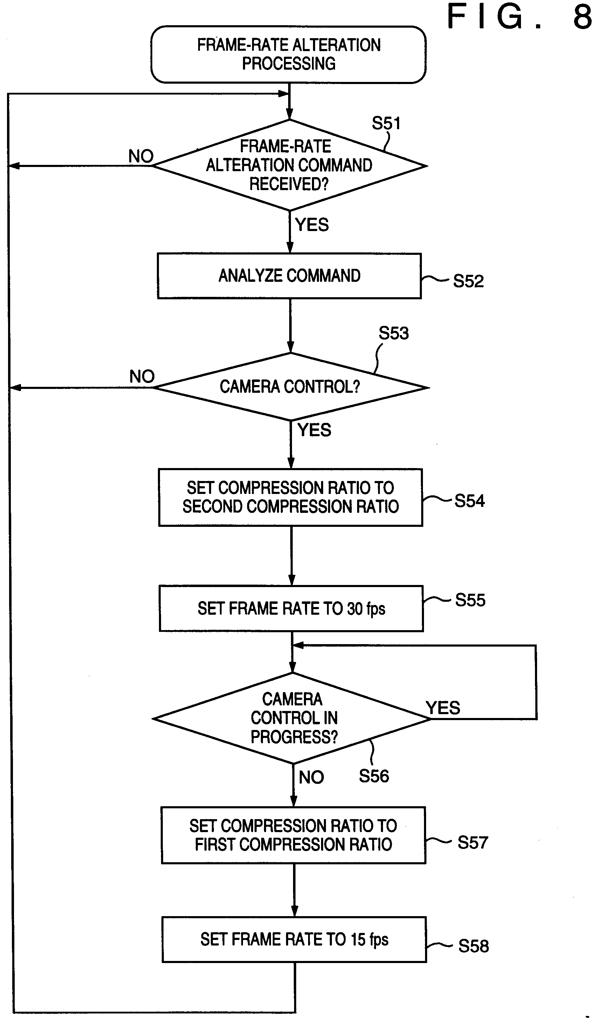

Fig. 8 is a flowchart showing a procedure for changing frame rate based upon a control command.

The communication control unit 30 determined at step S51 whether a control command has been received. If the command has been received ("YES" at step S51), the program proceeds to step S52 and the control command is analyzed. If the result of analysis is that a camera operation accompanied by alteration of camera panning, tilting or zooming has been commanded, then the program proceeds from step S53 to step S54 so that the frame rate in the communication control unit 30 is changed to 30 fps. The data compression ratio of the data compression unit 35 is then raised at step S55.

Next, it is determined at step S56 whether the command indicating camera operation is still in effect. Specifically, whether a control command accompanying camera control has entered within a predetermined period of time is checked and it is determined whether control of the camera is continuing. If it is judged that camera control has ended, the program proceeds to step S57. Here the frame rate in the communication control unit 30 is restored to the original 15 fps. This is followed by step S58, at which the compression ratio of the data compression unit 35 is restored to the original compression ratio (first compression ratio). The alteration of the compression ratio at step S55 is unnecessary if the LAN 10 will allow the traffic.

The rectangular frame 76 on the display (Fig. 2) presented by the operation unit 46 in the foregoing embodiment is assumed to be photographic area of the camera when the angle of view is maximized. In this case the rectangular area 78 decreases in size as the camera is zoomed toward the telephoto side. This is inconvenient in a case where the rectangular frame 78 is used as the image window 79 (Fig. 3).

Accordingly, an arrangement should be adopted in which the rectangular frame 76 is made the photographic area of the camera at the current angle of view. In this case, the size of the rectangular area 78 will not change and the area 78 will be convenient for use as the image window 79.

Further, in the foregoing embodiment, the tilting angle and the panning angle of the camera are controlled by the control buttons 62, 64, 66 and 68. However, an arrangement may be adopted in which the rectangular frame 78 is designated by the mouse cursor (not shown) and the tilting and panning angles are controlled by performing a dragging operation in the rectangular frame 76. In such case the panning angle and tilting angle would be acquired from the positional relationship between the center of the rectangular frame 76 and the center of the rectangular frame 78, and these would be transmitted to the camera management unit as control commands. Further, the decision at step S18 (Fig. 5) as to whether camera control is in progress may be rendered based upon whether the mouse is currently being dragged.

In the embodiment described above, it is stated that only one camera is connected to one camera management unit. However, it should be obvious that a plurality of cameras may be connected to one camera management unit. Whether a plurality of cameras are connected and the number of camera capable of being connected is merely a problem relating to the processing capability needed for the video signals, which present the heaviest processing load.

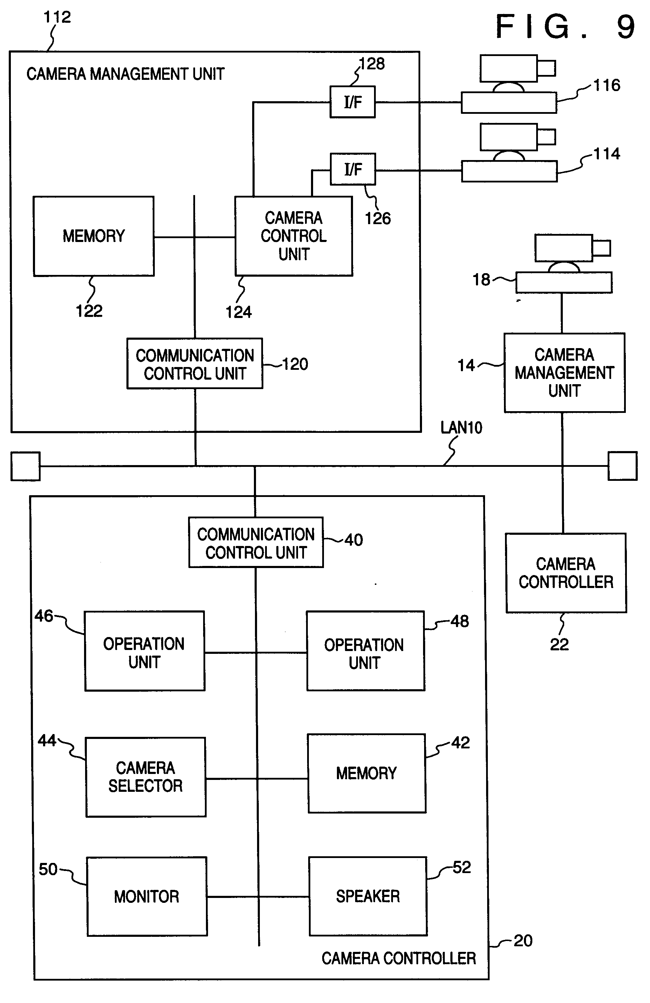

Fig. 9 is a block diagram schematically showing such a modification. Here a camera management unit 112 is connected to the LAN 10 and manages two video cameras 114, 116. The camera management unit 112 has a communication control unit 120 and a memory device 122 similar to the communication control unit 30 and memory device 32, respectively, as well as a camera control unit 24 having the ability to control two or more cameras, and camera interfaces 126, 128 for connecting the cameras 114, 116, respectively, to the camera control unit 124. Other elements identical with those shown in Fig. 1 are designated by like reference characters.

In order to specify a camera to be controlled in a case where the single camera management unit 12 thus manages the plurality of cameras 114, 116, it will suffice to specify the camera management unit 112 and to add information which specifies the particular camera among the plurality of cameras 114, 116 managed by this camera management unit.

Of course, in a case where the communication control unit 120 of the camera management unit 112 is capable of establishing logical communication channels the number of which is equal to the number of cameras 114, 116, connect requests from a plurality of camera controllers to different cameras can be dealt with simultaneously.

Similarly, with regard also to the camera controllers 20, 22, it should be obvious that it is easy to provide extended functionality so that a plurality of cameras can be controlled simultaneously.

In a case where the amount of communication data involved in video is large in comparison with the communication capacity of the LAN 10 or where the amount of other communication data being dealt with using the LAN 10 is large, some of the image communication data is lost, as a result of which omission of displayed images or re-transmission of video data for the purpose of making up for this loss of data frequently occurs. This can be an impediment to data communication for control of the camera.

One method of compensating for this inconvenience is to use a protocol one step of which is stipulation of re-transmission of data for the purpose of camera control. However, in the case of a network system such as the Ethernet employed in this embodiment, a time delay extending up to data re-transmission lengthens if the total of image communication data and other communication data is large. It often happens that so-called "time-out" occurs, in which processing halts upon elapse of a predetermined period of time.

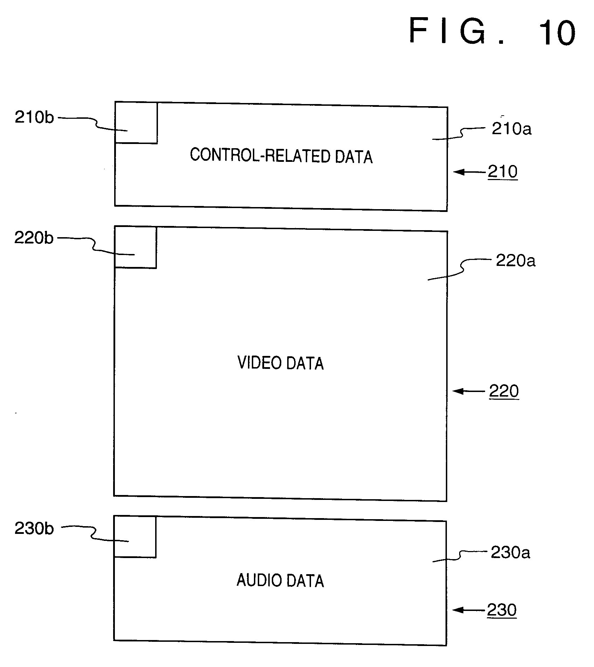

To avoid this, according to this embodiment, data for camera control directed from the camera management unit 12 to the camera controller 20 are transmitted upon being added onto the video or audio data or both in the communication control unit 30 of the camera management unit 12, as shown in Fig. 10. The data for camera control mentioned here are data which include an answer command or an error command in response to an operation instruction command issued by the camera controller 20, and either position data regarding the panning and tilting direction of the camera 16 or lens zoom values. These data shall be referred to collectively as "control-related data".

These data are added on only if the control-related data are to be communicated. The control-related data that have been added on are separated from the video or audio data in the communication control unit 40 of the camera controller 20.

Fig. 10 illustrates the data block of each item of data. Blocks 210, 220 and 230 are a control-related data block, a video data block and an audio data block respectively. The control-related data described above are stored in an area 210a of the control-related data block 210, video data that have been subjected to compressive encoding by an image processing circuit (or software), not shown, are stored in an area 220a of the video data block 220, and audio data that have been compressively encoded by a video processing circuit (or software), not shown, are stored in an area 230a of the audio data block 230.

Identifiers of the types of blocks, block size and data such as check sums for testing the accuracy of the block data are stored in areas 210b, 220b and 230b. The separation of the control-related data in the communication control unit 40 is carried out while reference is made to the block-type identifiers that have been stored in the areas 210b, 220b and 230c.

In this embodiment, these data are divided into packets of prescribed number of bits and are sent from the camera management unit 12 to the camera controller 20 in conformity with a transmission timing that is based upon the set video frame rate. When no control-related data and audio data exist, only the video data may be transmitted, as a matter of course.

In many cases more reliability is required of the control-related data than of the video or audio data. Accordingly, the adding on of these data is effective in a case where video or audio data are sent by a protocol having a step which stipulates re-transmission or in a case where packet loss is sensed by both the camera management unit 12 and camera controller 20 and re-transmission of video and audio data is carried out. The reason for this is that since the control-related data are transmitted upon being added to at least one of the audio and video data, the control-related data are transmitted together with the video or audio data even when the video and audio data are re-transmitted, and therefore communication of the control-related data is not hindered by these video or audio data.

The present invention is also applicable to a case where the invention is implemented by supplying a system or apparatus with a program. In such case a storage medium storing a program according to the invention constitutes the present invention. By reading the program from this storage medium to the system or apparatus, the system or apparatus can be made to operate in a predetermined manner.

In accordance with the present invention, as will be readily understood from the foregoing description, a system is provided in which a plurality of remotely controllable cameras and at least one camera controller are connected via a communication line, wherein any camera can be selected and controlled by a simple operation. It is also possible to control a camera smoothly while verifying motion of the image.

As many apparently widely different embodiments of the present invention can be made without departing from the spirit and scope thereof, it is to be understood that the invention is not limited to the specific embodiments thereof except as defined in the appended claims.

A camera control system for remotely controlling a camera has one or more camera management units for managing one or more cameras whose image-capture orientation and magnification are freely externally controlled, and one or more camera controllers for controlling the cameras via the camera management units. When control of a camera is designated in the camera controller of this system, a frame-rate alteration request is issued by the camera controller. Upon receiving the frame-rate alteration request, the camera management unit enlarges the frame rate of video obtained from the camera and transfers the image data to the camera controller.

## Claims

1. A camera control system characterized by comprising:
control means (34) for controlling at least one camera based upon entered operating information;
output means (30) for outputting image data, which are obtained from a camera under the control of said control means, at a predetermined frame rate;
operating means (20) for issuing operating information for operating a camera via said control means; and
altering means (20, 34) for making the frame rate in said output means larger than the predetermined frame rate in a case where said control means controls said camera under control on the basis of the operating information issued by said operating means.

2. The system according to claim 1, wherein said control means controls at least one of image-capture orientation and image-capture magnification of said camera under control on the basis of the entered operating information.

3. The system according to claim 1, wherein said altering means enlarges the frame rate in said output means by lowering resolution of the image.

4. The system according to claim 1, wherein said altering means enlarges the frame rate in said output means by enlarging compression ratio when image data are compressed.

5. The system according to claim 1, wherein said altering means includes:
designating means (48, S14) for issuing designating information designating alteration of the frame rate in a case where operating information has been issued by said operating means; and
frame-rate altering means (12, S31-37) for altering the frame rate in said output means in a case where designating information has been issued by said designating means.

6. The system according to claim 5, further comprising connecting means (10, 30, 40) for connecting a first device (12) and a second device (20) so that these devices can communicate with each other, said first device including said output means and said frame-rate altering means, and said second device including said operating means and said designating means.

7. The system according to claim 1, wherein said altering means detects that operating information has been issued by said operating means and makes the frame rate in said output means greater than the predetermined frame rate in a case where issuance of the operating information has been detected.

8. The system according to claim 1, wherein said output means adds control data (210), which are for controlling said camera under control, to image data (220) and then outputs the image data.

9. The system according to claim 8, wherein said output means outputs audio data along with image data from said camera under control and adds the control data to at least one of the image data and audio data (230).

10. The system according to claim 8, further comprising:
separating means (40) for receiving data, which have been outputted by said output means, and separating the control data from the received data; and
display means (50) for displaying image data obtained by separating the control data in said separating means, and displaying an image based upon the frame rate set at such time.

11. A camera control apparatus for controlling at least one camera based upon externally applied operating information, characterized by comprising:
control means (34) for controlling the camera based upon the externally applied operating information;
output means (30) for outputting an image, which has been obtained from a camera under control of said control means, at a predetermined frame rate; and
altering means (34, S31-37) for making the frame rate in said output means larger than the predetermined frame rate in a case where control of said camera under control has been executed by said control means.

12. The apparatus according to claim 11, wherein said altering means executes alteration of the frame rate of said output means in a case where externally applied alteration designating information designating alteration of the frame rate has been detected.

13. The apparatus according to claim 11, wherein said altering means executes alteration of the frame rate of said output means in a case where it is detected that operating information relating to camera operation has been externally applied.

14. The apparatus according to claim 11, wherein said control means controls at least one of image-capture orientation and image-capture magnification of said camera under control on the basis of the entered operating information.

15. The apparatus according to claim 11, wherein said control means enlarges the frame rate in said output means by lowering resolution of the image.

16. The apparatus according to claim 11, wherein said control means enlarges the frame rate in said output means by enlarging compression ratio when image data are compressed.

17. The apparatus according to claim 11, wherein said output means adds control data (210), which are for controlling said camera under control, to image data (220) and then outputting the image data (230).

18. The apparatus according to claim 11, wherein said output means outputs audio data along with image data from said camera under control and adds the control data (210) to at least one of the image data (220) and audio data (230).

19. A camera operating apparatus for operating a camera via a camera control apparatus for controlling at least one camera based upon externally applied operating information, characterized by comprising:
first issuing means (40, 46, 48, S15) for issuing operating information, which is for operating the camera, to said camera control apparatus on the basis of an operation input from a user,
second issuing means (40, 46, 48, S14) for issuing a frame-rate alteration request to change the frame rate of a camera under operation when the operating information is issued by said first issuing means;
receiving means (40, S17) for receiving image data from said camera control apparatus; and
display means (50) for displaying the image data in accordance with a frame rate set for the image data received by said receiving means.

20. The apparatus according to claim 19, wherein control data (210) for control of a camera by said camera control apparatus have been added to the image data (220), further comprising separating means for separating the control data from the image data received by said receiving means.

21. The apparatus according to claim 20, wherein said receiving means is capable of receiving image data (220) and audio data (230), and said separating means (40) separates the control data (210) that have been added to one of at least image data and audio data received by said receiving means.

22. A method of controlling a camera control system, characterized by comprising:
a control step (S51) of controlling at least one camera based upon entered operating information;
an output step (30) of outputting image data, which are obtained from a camera under the control of said control step, at a predetermined frame rate;
an operating step (S15) of issuing operating information for operating a camera via said control step; and
an altering step (S14) of making the frame rate at said output step larger than the predetermined frame rate in a case where control of said camera under control at said control step is carried out on the basis of the operating information issued at said operating step.

23. The method according to claim 22, wherein said control step controls at least one of image-capture orientation and image-capture magnification of said camera under control on the basis of the entered operating information.

24. The method according to claim 22, wherein said altering step enlarges the frame rate at said output step by lowering resolution of the image.

25. The method according to claim 22, wherein said altering step enlarges the frame rate at said output means by enlarging compression ratio when image data are compressed.

26. The method according to claim 22, wherein said altering step includes:
a designating step (S14) of issuing designating information designating alteration of the frame rate in a case where operating information has been issued at said operating step; and
a frame-rate step (S31-37) of altering the frame rate at said output step in a case where designating information has been issued at said designating step.

27. The method according to claim 22, wherein said altering step includes detecting that operating information has been issued at said operating step and making the frame rate at said output step greater than the predetermined frame rate in a case where issuance of the operating information has been detected.

28. The method according to claim 22, wherein said output step includes adding control data (210), which are for controlling said camera under control, to image data (220) and then outputting the image data.

29. The method according to claim 28, wherein said output step includes outputting audio data (230) along with image data (220) from said camera under control and adding the control data (210) to at least one of the image data and audio data.

30. The method according to claim 28, further comprising:
a separating step (40) of receiving data, which have been outputted at said output step, and separating the control data from the received data; and
a display step (50) of displaying image data obtained by separating the control data at said separating step, and displaying an image based upon the frame rate set at such time.

31. A camera control method for controlling at least one camera based upon externally applied operating information, characterized by comprising:
a control step (S51) of controlling the camera based upon the externally applied operating information;
an output step (30) of outputting an image, which has been obtained from a camera under control of said control step, at a predetermined frame rate; and
an altering step (S31-37) of making the frame rate at said output step larger than the predetermined frame rate in a case where control of said camera under control has been executed at said control step.

32. The method according to claim 31, wherein said altering step executes alteration of the frame rate at said output step in a case where externally applied alteration designating information designating alteration of the frame rate has been detected.

33. The method according to claim 31, wherein said altering step executes alteration of the frame rate at said output step in a case where it is detected that operating information relating to camera operation has been externally applied.

34. The method according to claim 31, wherein said control step controls at least one of camera image-capture orientation and camera image-capture on the basis of the entered operating information.

35. The method according to claim 31, wherein said altering step enlarges the frame rate at said output step by lowering resolution of the image.

36. The method according to claim 31, wherein said altering step enlarges the frame rate at said output step by enlarging compression ratio when image data are compressed.

37. The method according to claim 31, wherein said output step includes adding control data (210), which are for controlling said camera under control, to image data (220) and then outputting the image data.

38. The method according to claim 31, wherein said output step includes outputting audio data (230) along with image data (220) from said camera under control and adding the control data (210) to at least one of the image data and audio data.

39. A method of controlling a camera operating apparatus for operating a camera via a camera control apparatus for controlling at least one camera based upon externally applied operating information, characterized by comprising:
a first issuing step (S15) of issuing operating information, which is for operating the camera, to said camera control apparatus on the basis of an operation input from a user,
a second issuing step (S14) of issuing a frame-rate alteration request to change the frame rate of a camera under operation when the operating information is issued at said first issuing step;
a receiving step (S17) of receiving image data from said camera control apparatus; and
a display step (50) of displaying the image data in accordance with a frame rate set for the image data received at said receiving step.

40. The method according to claim 39, wherein control data (210) for control of a camera by said camera control apparatus have been added to the image data (220), further comprising a separating step (40) of separating the control data from the image data received at said receiving step.

41. The method according to claim 40, wherein said receiving step is capable of receiving image data (220) and audio data (230), and said separating step separates the control data that have been added to one of at least image data and audio data received at said receiving step.

42. A computer readable memory storing program codes for controlling a camera control apparatus which control at least one camera based upon externally applied operating information, said memory comprising:
a program code for implementing a control step of controlling the camera based upon the externally applied operating information;
a program code for implementing an output step of outputting an image, which has been obtained from a camera under control of said control step, at a predetermined frame rate; and
a program code for implementing an altering step of making the frame rate at said output step larger than the predetermined frame rate in a case where control of said camera under control has been executed at said control step.

43. A computer readable memory storing program codes for controlling a camera operating apparatus which operates a camera via a camera control apparatus for controlling at least one camera based upon externally applied operating information, said memory comprising:
a program code for implementing a first issuing step of issuing operating information, which is for operating the camera, to said camera control apparatus on the basis of an operation input from a user,
a program code for implementing a second issuing step of issuing a frame-rate alteration request to change the frame rate of a camera under operation when the operating information is issued at said first issuing step;
a program code for implementing a receiving step of receiving image data from said camera control apparatus; and
a program code for implementing a display step of displaying the image data in accordance with a frame rate set for the image data received at said receiving step.
